# EUROPEAN PATENT APPLICATION

(11) **EP 3 739 421 A1**
(43) Date of publication of application: **18.11.2020**
(21) Application number: 20165098.3
(22) Date of filing: 24.03.2020
(51) Int. Cl.: G05D 1/10, G08G 5/00

(54) **PREDICTING WAKE TURBULENCE OF ADVANCING AIRCRAFT**

(30) Priority: 13.05.2019 US 201916410955
(71) Applicant: Gulfstream Aerospace Corporation, Savannah, Georgia 31402 (US)
(72) Inventor: DAVIS, Bethany, Savannah, Georgia 31402 (US); MARTIN, Andrew, Savannah, Georgia 31402 (US)
(74) Representative: LKGlobal UK Ltd.

(57) **Abstract**

Aircraft, avionics systems, and methods for predicting a wake turbulence (34, 36) generated by an advancing aircraft (10, 12) are provided. In one example, an aircraft (10, 12) includes a fuselage (18, 20) having a cockpit area (19, 21) and an avionics system interfacing with the cockpit area. The avionics system is configured to receive a plurality of data signals. The data signals include ADS-B IN data signals from an advancing aircraft (10, 12). The avionics system is operative to predict a wake turbulence (34, 36) generated by the advancing aircraft (10, 12) in response to at least one of the data signals, thereby defining a predicted wake turbulence.

## Description

### TECHNICAL FIELD

The technical field relates generally to aircraft, and more particularly, relates to an avionics system for an aircraft for predicting wake turbulence generated by another advancing aircraft, an aircraft including such an avionics system, and a method for using such an avionics system.

### BACKGROUND

Aircraft produce wake turbulence while advancing along a flight path. This wake turbulence primarily results from wing tip vortices generated by the advancing aircraft. Wing tip vortices are produced as a consequence of creating lift in which low-pressure air moving above and along the upper surfaces of the aircraft wings mixes with high-pressure air moving below and along the lower surfaces of the aircraft wings. These wing tip vortices generally trail behind the aircraft wing tip in a conical shape. The size or strength of the wing tip vortices generated by the aircraft primarily depends upon the aircraft size, wing shape, and speed. The propagation path of the wake turbulence resultant from these wing tip vortices further depends upon the weather and wind conditions, which act on the wing tip vortices to move them in a particular direction(s) and/or various non-linear directions.

The wake turbulence generated by an advancing aircraft can be problematic for other nearby aircraft if the relative size, e.g., strength, of the wake turbulence is significant and if the wake turbulence comes within relatively close proximity of the other nearby aircraft before significantly dissipating in size or strength. For example, on January 7, 2017 a German registered Challenger aircraft rolled several times after encountering wake turbulence from an Airbus A380 aircraft over the Arabian Sea. The encounter exceeded the Challenger's airframe certification design load and the aircraft could not be repaired to an airworthy state. In another example, wake turbulence generated by an aircraft during take-off can present issues to other nearby aircraft that are about to take-off if the wake turbulence has not substantially subsided in time. In yet another example, wake turbulence generated by an aircraft during landing can present issues to other nearby aircraft that are about to land if the wake turbulence has not substantially subsided in time.

Accordingly, it is desirable to provide an aircraft, a system, and a method for predicting wake turbulence generated by advancing aircraft for addressing one or more of the foregoing issues. Furthermore, other desirable features and characteristics of the various embodiments described herein will become apparent from the subsequent detailed description and the appended claims, taken in conjunction with the accompanying drawings and this background.

### SUMMARY

Various non-limiting embodiments of an aircraft adapted to move along a flight path, an avionics system for an aircraft adapted to move along a flight path, and a method for predicting a wake turbulence generated by an advancing aircraft, are provided herein.

In a first non-limiting embodiment, the aircraft includes, but is not limited to, a fuselage having a cockpit area. The aircraft further includes, but is not limited to, an avionics system interfacing with the cockpit area. The avionics system is configured to receive a plurality of data signals. The data signals include ADS-B IN data signals from an advancing aircraft. The ADS-B IN data signals include an advancing aircraft length data signal, an advancing aircraft width data signal, an advancing aircraft latitude data signal, an advancing aircraft longitude data signal, an advancing aircraft barometric pressure altitude data signal, an advancing aircraft velocity data signal, an advancing aircraft emitter category data signal, and an advancing aircraft geometric altitude data signal. The avionics system is operative to predict a wake turbulence generated by the advancing aircraft in response to at least one of the data signals, thereby defining a predicted wake turbulence.

In another non-limiting embodiment, the avionics system includes, but is not limited to, at least one transponder antenna. The at least one transponder antenna is configured to receive a plurality of data signals. The data signals include ADS-B IN data signals from an advancing aircraft. The ADS-B IN data signals include an advancing aircraft length data signal, an advancing aircraft width data signal, an advancing aircraft latitude data signal, an advancing aircraft longitude data signal, an advancing aircraft barometric pressure altitude data signal, an advancing aircraft velocity data signal, an advancing aircraft emitter category data signal, and an advancing aircraft geometric altitude data signal. The avionics system further includes, but is not limited to, at least one transponder receiver box. The at least one transponder receiver box is in communication with the at least one transponder antenna to receive the ADS-B IN data signals. The avionics system further includes, but is not limited to, an avionics computer. The avionics computer is in communication with the at least one transponder receiver box that is configured to digitize the ADS-B IN data signals for communication to the avionics computer. The avionics computer is operative to predict a wake turbulence generated by the advancing aircraft in response to at least one of the data signals, thereby defining a predicted wake turbulence.

In another non-limiting embodiment, the method includes, but is not limited to, receiving a plurality of data signals by an avionics system. The data signals include ADS-B IN data signals from an advancing aircraft. The ADS-B IN data signals include an advancing aircraft length data signal, an advancing aircraft width data signal, an advancing aircraft latitude data signal, an advancing aircraft longitude data signal, an advancing aircraft barometric pressure altitude data signal, an advancing aircraft velocity data signal, an advancing aircraft emitter category data signal, and an advancing aircraft geometric altitude data signal. The method further includes, but is not limited to, predicting via the avionics system the wake turbulence generated by the advancing aircraft in response to at least one of the data signals.

### BRIEF DESCRIPTION OF THE DRAWINGS

The various embodiments will hereinafter be described in conjunction with the following drawing figures, wherein like numerals denote like elements, and wherein:
FIG. 1 illustrates a top view of two aircraft flying in opposing directions along adjacent flight paths in accordance with an exemplary embodiment;
FIG. 2 illustrates a block diagram of an avionics system for an aircraft in accordance with an exemplary embodiment;
FIG. 3 illustrates a flow chart for determining a response based on the predicted wake turbulence in accordance with exemplary embodiments; and
FIG. 4 illustrates a method for predicting a wake turbulence generated by an advancing aircraft in accordance with an exemplary embodiment.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Various embodiments contemplated herein relate to avionics systems for an aircraft for predicting wake turbulence generated by another advancing aircraft, aircraft including such an avionics system, and methods for using such an avionics system. The exemplary embodiments taught herein provide an aircraft having a fuselage including a cockpit area for a pilot and/or another crew member(s). The aircraft includes an avionics system interfacing with the cockpit area. For example, the avionics system may include a display that is arranged in the cockpit area for communicating with and/or displaying information to the pilot and/or other crew member(s).

The avionics system is configured to receive a plurality of data signals. In an exemplary embodiment, the data signals include ADS-B IN data signals from another relatively nearby advancing aircraft. In particular, ADS-B data signals are automatic dependent surveillance-broadcast data signals that enable tracking of the aircraft as well as transfer of information to and/or from the aircraft. Per the Federal Aviation Administration, output of ADS-B data signals by aircraft in the United States, subject to various requirements, will be required by January 1, 2020. Further, regulations requiring output of ADS-B data signals by aircraft have been, are, or will be in effect in various other locations around the world. Among a plurality of data and/or information associated with the ADS-B data signals, the ADS-B data signals required for output by an aircraft include at least, for example, a length of the aircraft, a width of the aircraft, a latitude of the aircraft, a longitude of the aircraft, a barometric pressure altitude of the aircraft, a velocity of the aircraft, an emitter category of the aircraft, a geometric altitude of the aircraft, and an indication of whether the aircraft has capabilities to receive ADS-B data signals (e.g., receive as input ADS-B data signals or ADS-B IN data signals) from another aircraft. As such, the ADS-B IN data signals, which are output ADS-B data signals from the other nearby advancing aircraft, are received as input data signal to the avionics system of the exemplary aircraft and correspondingly include the following: an advancing aircraft length data signal (a length of the advancing aircraft), an advancing aircraft width data signal (a width of the advancing aircraft), an advancing aircraft latitude data signal (a latitude of the advancing aircraft, an advancing aircraft longitude data signal (a longitude of the advancing aircraft), an advancing aircraft barometric pressure altitude data signal (a barometric pressure altitude of the advancing aircraft), an advancing aircraft velocity data signal (a velocity of the advancing aircraft), an advancing aircraft emitter category data signal (an emitter category of the advancing aircraft which relates to the size of the advancing aircraft), and an advancing aircraft geometric altitude data signal (a geometric altitude of the advancing aircraft).

The avionics system is operative to predict a wake turbulence generated by the advancing aircraft in response to at least one of the data signals, thereby defining a predicted wake turbulence. In one example, the avionics system uses an algorithm that is configured to use one or more of the data signals to model airflow about the advancing aircraft to predict the predicted wake turbulence. In another example, the algorithm is configured to access a database of various aircraft with corresponding wake turbulence characteristics, and to match the advancing aircraft with one of the various aircraft in the database including the corresponding wake turbulence characteristics using one or more of the data signals, to predict the predicted wake turbulence.

In an exemplary embodiment, the avionics system is further operative to predict whether the predicted wake turbulence associated with the advancing aircraft is predicted to pass nearby, for example, within a predetermined proximity of the flight path of the exemplary aircraft. In an exemplary embodiment, if the predicted wake turbulence is predicted to pass within the predetermined proximity of the flight path, the avionics system is further operative to generate a communication to the display in the cockpit area of the aircraft, for example, to inform the pilot and/or other crew members of the approaching wake turbulence. In an exemplary embodiment, advantageously by communicating an approaching wake turbulence generated by an advancing aircraft to the display, the pilot and/or other crew members have sufficient notice and time to implement, for example, an appropriate response to avoid the approaching wake turbulence.

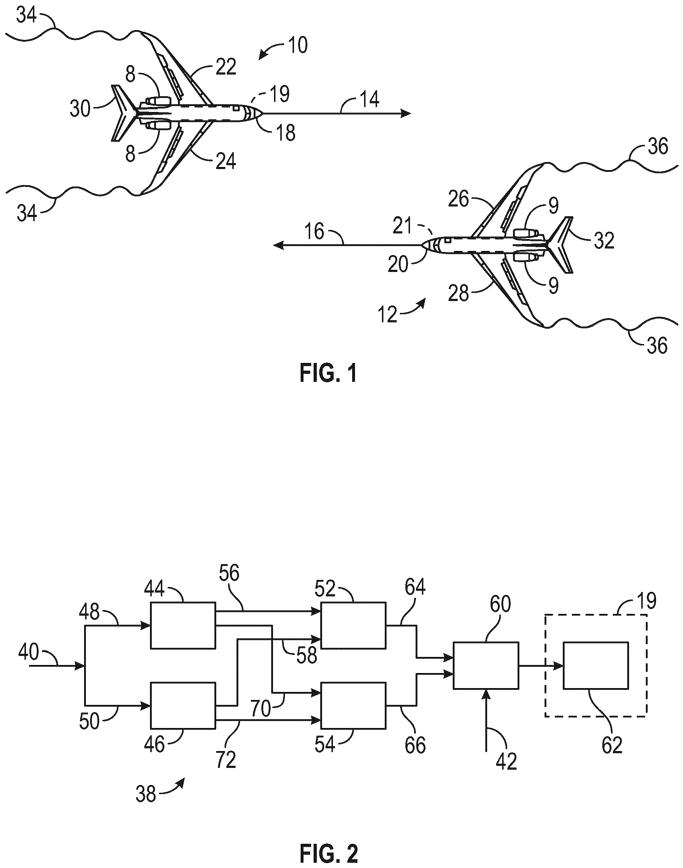

FIG. 1 illustrates a top view of an aircraft 10 (also referred to herein as" exemplary aircraft") and an aircraft 12 (also referred to herein as "advancing aircraft") flying in opposing directions along adjacent flight paths (indicated by single-headed arrows 14 and 16), respectively, in accordance with an exemplary embodiment. As used herein, the term "advancing" refers to an aircraft moving along its flight path. Although the two aircraft 10 and 12 are illustrated as flying in opposing directions along adjacent flight paths, it is to be understood that various embodiments may include the aircraft 10 and the aircraft 12, independently or in combination, being grounded, taking-off, landing, flying in non-opposing directions along adjacent flight paths, flying in generally opposing directions along non-adjacent flight paths, and/or flying in non-opposing directions along non-adjacent flight paths.

The aircraft 10 and 12 each include a fuselage 18 or 20 and wings 22, 24 or 26, 28 extending laterally outward from the fuselage 18 or 20, respectively. The fuselage 18 of the aircraft 10 has a cockpit area 19 for its corresponding pilot and/or other crew members. Likewise, the fuselage 20 of the aircraft 12 has a cockpit area 21 for its corresponding pilot and/or other crew members. Further, each of the aircraft 10 or 12 includes one or more engines 8 or 9 and a tail 30 or 32, respectively.

As illustrated, the aircraft 10 and 12 are flying at corresponding altitudes. As discussed above, as a consequence of creating lift during flight, each of the aircraft 10 or 12 correspondingly generate a wake turbulence 34 or 36 or wing tip vortices that generally trail behind the wing tips of the corresponding aircraft 10 or 12. In one example, the aircraft 10 is flying at a higher altitude than the aircraft 12. In another example, the aircraft 10 is flying at about the same altitude as the aircraft 12. In another example, the aircraft 10 is flying at a lower altitude than the aircraft 12.

The aircraft 10 and 12 are each operative to output ADS-B data signals. As discussed above, output ADS-B data signals include information corresponding to, for example, a length of the aircraft, a width of the aircraft, a latitude of the aircraft, a longitude of the aircraft, a barometric pressure altitude of the aircraft, a velocity of the aircraft, an emitter category of the aircraft, a geometric altitude of the aircraft, and an indication of whether input ADS-B capabilities are installed. Input ADS-B data signals correspond to the receipt of the information broadcasted by output ADS-B data signals by an aircraft. An example of emitter categories for various size and/or type of aircraft is as follows:

| **ADS-B Emitter Category SET "A"** | |
|---|---|
| **Coding** | **Meaning** |
| 0 | No ADS-B Emitter Category Information |
| 1 | Light (<15500 lbs.) |
| 2 | Small (15500 to 75000 lbs.) |
| 3 | Large (75000 to 300000 lbs.) |
| 4 | High-Vortex Large (aircraft such as B-757) |
| 5 | Heavy (> 300000 lbs.) |
| 6 | High Performance |
| | (>5g acceleration and > 400 knots) |
| 7 | Rotorcraft |

In an exemplary embodiment, the aircraft 10 receives input ADS-B data signals (ADS-B IN data signals) that were transmitted from the advancing aircraft 12 as output ADS-B data signals (ADS-B OUT data signals). The ADS-B IN data signals include information corresponding to a length of the aircraft 12 (also referred to herein as "advancing aircraft length data signal"), a width of the aircraft 12 (also referred to herein as "advancing aircraft width data signal"), a latitude of the aircraft 12 (also referred to herein as "advancing aircraft latitude data signal"), a longitude of the aircraft 12 (also referred to herein as "advancing aircraft longitude data signal"), a barometric pressure altitude of the aircraft 12 (also referred to herein as "advancing aircraft barometric pressure altitude data signal"), a velocity of the aircraft 12 (also referred to herein as "advancing aircraft velocity data signal"), an emitter category of the aircraft 12 (also referred to herein as "advancing aircraft emitter category data signal"), and a geometric altitude of the aircraft 12 (also referred to herein as "advancing aircraft geometric altitude data signal").

Referring also to FIG. 2, the aircraft 10 includes an avionics system 38 that is in communication with the cockpit area 19 of the fuselage 18. As illustrated, in an exemplary embodiment, the avionics system 38 includes transponder antennas 44 and 46 that are each independently in communication with transponder receiver boxes 52 and 54, an avionics computer 60 including a processor (not illustrated), and a display 62 that is disposed, for example, in the cockpit area 19 of the aircraft 10. Although two transponder antennas and two transponder receiver boxes are illustrated, it is to be understood that various embodiments may include a single transponder antenna or more than two transponder antennas and/or a single transponder receiver box or more than two transponder receiver boxes. Further, although various block diagram elements shown in FIG. 2 are illustrated as discrete elements, this illustration is for use and explanation, and it should be recognized that certain elements may be combined in one or more physical devices, e.g., one or more microprocessor(s) with associated software or one or more displays.

The avionics system 38 is configured to receive a plurality of data signals via communication path 40 and optionally communication path 42. In an exemplary embodiment, the data signals received by the avionics system 38 include the ADS-B IN data signals 40 as the input ADS-B data signals discussed above. As illustrated, the ADS-B IN data signals 40 are received by the transponder antennas 44 and 46 via communication paths 48 and 50, respectively. The transponder antenna 44 communicates the ADS-B IN data signals to the transponder receiver boxes 52 and 54 via communication paths 56 and 70, respectively. In an exemplary embodiment, for purposes of redundancy, the transponder antenna 46 outputs the ADS-B IN data signals to both the transponder receiver boxes 52 and 54 via communication paths 58 and 72, respectively.

The transponder receiver boxes 52 and 54 independently digitize the ADS-B IN data signals and communicate the ADS-B IN data signals in digitized formats to the avionics computer 60 via communication paths 64 and 66, respectively. In an exemplary embodiment, the avionics computer further receives weather data signals via communication path 42. Optionally, other relevant data signals may be received by the avionics computer 60 via communication paths 42, 64, and/or 66. As will be discussed in further detail below, in an exemplary embodiment, the avionics computer 60 generates a communication to the display 62 via communication path 68.

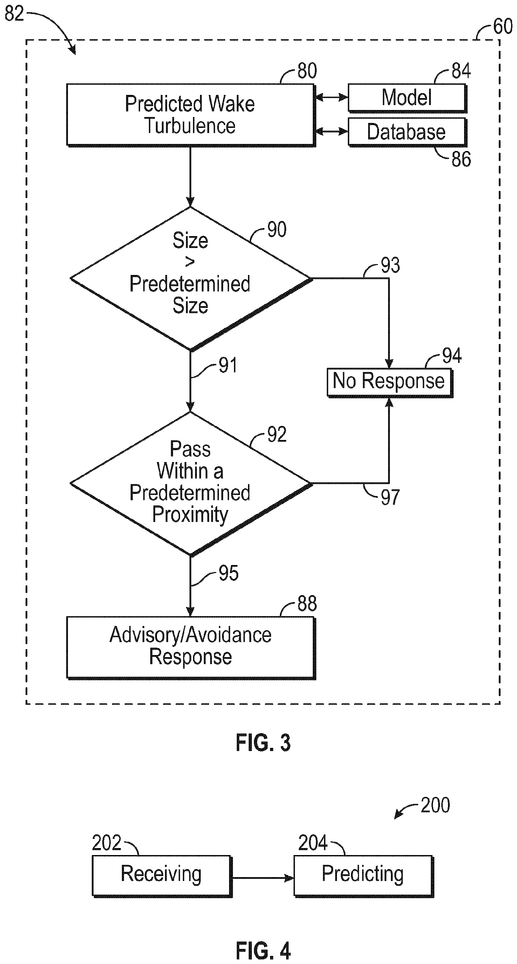

Referring also to FIG. 3, the avionics system 38 of the aircraft 10 is configured to or otherwise operative to predict the wake turbulence 36 of the aircraft 12 in response to at least one of the data signals received by the avionics system 38, thereby defining a predicted wake turbulence 80. In an exemplary embodiment, the avionics system 60 hosts an algorithm 82 that uses the data signals including the ADS-B IN data signals to predict the predicted wake turbulence 80. In one example, the algorithm 82 uses a model 84 (e.g. finite element analysis (FEA) model, fluid flow model, or the like) that receives the data signals and models airflow about the advancing aircraft 12 to predict the predicted wake turbulence 80. In another example, the algorithm 82 accesses a database 86 of various aircraft with corresponding wake turbulence characteristics and uses the data signals to match the advancing aircraft 12 with one of the various aircraft in the database 86 including the corresponding wake turbulence characteristics, which is used to predict the predicted wake turbulence 80.

In an exemplary embodiment, the predicted wake turbulence 80 includes a wake turbulence size, a wake turbulence location, and a wake turbulence propagation path. The wake turbulence size corresponds to the predicted magnitude or strength of the wake turbulence 36 of the aircraft 12. In an exemplary embodiment, the algorithm 82 predicts the wake turbulence size using at least the ADS-B IN data signals corresponding to a length of the aircraft 12, a width of the aircraft 12, and an emitter category of the aircraft 12. The wake turbulence location corresponds to the predicted location of the wake turbulence 36 of the aircraft 12. In an exemplary embodiment, the algorithm 82 predicts the wake turbulence location using at least the ADS-B IN data signals corresponding to a latitude of the aircraft 12, a longitude of the aircraft 12, a velocity of the aircraft 12, and a barometric pressure altitude and/or a geometric altitude of the aircraft 12. The wake turbulence propagation path corresponds to the predicted propagation path of the wake turbulence 36 of the aircraft 12. In an exemplary embodiment, the algorithm 82 predicts the wake turbulence propagation path using at least the data signals corresponding to weather data signals. Weather data signals include, for example, data signals related to wind direction, wind magnitude, temperature, and/or humidity levels. Wind direction and wind magnitude may be calculated by an aircraft inertial navigation system of the aircraft 10. In an exemplary embodiment, the algorithm 82 predicts weather data about the advancing aircraft 12 using weather data signals corresponding to the weather data about the aircraft 10. In an exemplary embodiment, the algorithm predicts weather data about the advancing aircraft 12 using weather data signals received as ADS-B IN data signals from the advancing aircraft 12.

As discussed in further detail below, the avionics computer 60 of the avionics system 38 of the aircraft 10 is operative to generate an advisory/avoidance response 88 if the wake turbulence size of the predicted wake turbulence 80 is greater than a predetermined size at box 90, and if the predicted wake turbulence 80 is predicted to pass within a predetermined proximity of the flight path 14 of the aircraft 10 at box 92. In an exemplary embodiment, the wake turbulence location and/or the wake turbulence propagation path of the predicted wake turbulence 80 is used to determine if the predicted wake turbulence 80 is predicted to pass within the predetermined proximity of the flight path 14 of the aircraft 10.

In particular and as illustrated, the algorithm 82 compares the wake turbulence size to the predetermined size at box 90. In an exemplary embodiment, a "predetermined size" means a threshold size at or just below where the aircraft 10 is predicted to possibly experience an issue(s) resultant from the predicted wake turbulence 80 corresponding to the wake turbulence 36 of the aircraft 12. The predetermined size may be, for example, a size slightly less than (e.g., 10% less than) the size of wake turbulence 34 generated by the aircraft 10. As such, if the wake turbulence size of the predicted wake turbulence 80 is significant, for example, about the same size or greater than the wake turbulence 34 generated by the aircraft 10, the algorithm 82 proceeds via line 91 to box 92. Alternatively, if the wake turbulence size of the predicted wake turbulence 80 is relatively small, for example, 50% less than the size of the wake turbulence 34 generated by the aircraft 10, the algorithm 82 proceeds via line 93 to box 94 indicating that no advisory/avoidance response is needed.

The algorithm 82 compares whether the predicted wake turbulence 80 is predicted to pass within the predetermined proximity of the flight path 14 of the aircraft 10 at box 92. In an exemplary embodiment, a "predetermined proximity" means a relatively close location along the flight path 14 of the aircraft 10 in which the aircraft is expected to soon pass and/or is predicted to possibly experience issues resultant from the predicted wake turbulence 80 corresponding to the wake turbulence 36 of the aircraft 12. The predetermined proximity is, for example, a proximity determined by the avionics system 38 and/or communicated to the avionics system 38. As such, if the predicted wake turbulence 80 is predicted to pass within the predetermined proximity of the flight path 14 of the aircraft 10, the algorithm 82 proceeds via line 95 to box 88. Alternatively, if the predicted wake turbulence 80 is predicted not to pass within the predetermined proximity of the flight path 14 of the aircraft 10, the algorithm 82 proceeds via line 97 to box 94 indicating that no advisory/avoidance response is needed.

At least one of the wake turbulence size, the wake turbulence location, and the wake turbulence propagation path can be used to predict a predicted strength for the predicted wake turbulence 80. In a non-limiting example, the algorithm 82 predicts a G (e.g., G force) transient corresponding to the predicted strength of the predicted wake turbulence 80. The value of the G transient may be used to determine the predicted severity of or the response urgency to the predicted wake turbulence 80.

As illustrated, the algorithm 82 generates the advisory/avoidance response at box 88. In an exemplary embodiment, an "advisory/avoidance response" includes an advisory communication, an advisory response, an avoidance communication, and/or an avoidance response. The advisory/avoidance responses may vary depending on predicted severity of or response urgency to the predicted wake turbulence 80. The advisory/avoidance responses may, for example, be advisory, cautionary, warning, and/or alerting. Examples of advisory/avoidance responses include communications and/or actions corresponding to adjusting the flight path 14 of the aircraft 10, deviation offset from the flight path 14 of aircraft 10, and/or a notice of the predicted strength of the predicted wake turbulence 80. In one example, a communication by the avionics computer 60 is communicated to the display 62 via communication path 68. In another example, the advisory/avoidance response is a deviation for a lateral offset from the flight path 14 of the aircraft 10. In yet another example, the advisory/avoidance response is a communication to the display 62 that includes an advisory message. In another example, the advisory/avoidance response is a communication to the display 62 that includes a recommendation to postpone take-off of the aircraft 10 for a predetermined period of time (e.g., about 1 to about 5 minutes). In yet another example, the advisory/avoidance response is a communication to the display 62 that includes a recommendation to postpone landing of the aircraft 10 for a predetermined period of time (e.g., about 1 to about 5 minutes).

Referring to FIG. 4, a method 200 for predicting a wake turbulence generated by an advancing aircraft in accordance with an exemplary embodiment is provided. The method includes receiving (STEP 202) a plurality of data signals by an avionics system. The data signals include ADS-B IN data signals from an advancing aircraft. The ADS-B IN data signals include an advancing aircraft length data signal, an advancing aircraft width data signal, an advancing aircraft latitude data signal, an advancing aircraft longitude data signal, an advancing aircraft barometric pressure altitude data signal, an advancing aircraft velocity data signal, an advancing aircraft emitter category data signal, and an advancing aircraft geometric altitude data signal. The method further includes predicting (STEP 204) via the avionics system the wake turbulence generated by the advancing aircraft in response to at least one of the data signals.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the disclosure as set forth in the appended claims.

## Claims

1. An aircraft adapted to move along a flight path, the aircraft comprising:
a fuselage having a cockpit area; and
an avionics system interfacing with the cockpit area and configured to receive a plurality of data signals, the data signals including ADS-B IN data signals from an advancing aircraft including an advancing aircraft length data signal, an advancing aircraft width data signal, an advancing aircraft latitude data signal, an advancing aircraft longitude data signal, an advancing aircraft barometric pressure altitude data signal, an advancing aircraft velocity data signal, an advancing aircraft emitter category data signal, and an advancing aircraft geometric altitude data signal, and wherein the avionics system is operative to predict a wake turbulence generated by the advancing aircraft in response to at least one of the data signals, thereby defining a predicted wake turbulence.

2. The aircraft of claim 1, wherein the avionics system comprises:
a first transponder antenna configured to receive the ADS-B IN data signals from the advancing aircraft;
a first transponder receiver box in communication with the first transponder antenna to receive the ADS-B IN data signals;
an avionics computer in communication with the first transponder receiver box that is configured to digitize the ADS-B IN data signals for communication to the avionics computer, wherein the avionics computer is operative to predict the predicted wake turbulence in response to at least one of the ADS-B IN data signals; and
a display in communication with the avionics computer.

3. The aircraft of claim 2, wherein the avionics computer is operative to predict whether the predicted wake turbulence is predicted to pass within a predetermined proximity of the flight path of the aircraft.

4. The aircraft of claim 3, wherein the avionics computer is operative to generate a communication to the display if the predicted wake turbulence is predicted to pass within the predetermined proximity of the flight path.

5. The aircraft of claim 4, wherein the communication is an advisory message; and/or
wherein the communication is a recommendation for a deviation offset from the flight path of the aircraft; and/or
wherein the communication is a recommendation to postpone take-off of the aircraft for a predetermined period of time; and/or.
wherein the communication is a recommendation to postpone landing of the aircraft for a predetermined period of time.

6. The aircraft of any one of claims 3 to 5, wherein the avionics computer is operative to predict a wake turbulence size corresponding to the predicted wake turbulence using at least the advancing aircraft length data signal, the advancing aircraft width data signal, and the advancing aircraft emitter category data signal.

7. The aircraft of claim 6, wherein the avionics computer is operative to predict a wake turbulence location corresponding to the predicted wake turbulence using at least the advancing aircraft latitude data signal, the advancing aircraft longitude data signal, the advancing aircraft velocity data signal, and at least one of the advancing aircraft barometric pressure altitude data signal and the advancing aircraft geometric altitude data signal.

8. The aircraft of claim 7, wherein the avionics computer is configured to receive the data signals including weather data signals.

9. The aircraft of claim 8, wherein the avionics computer is operative to predict a wake turbulence propagation path corresponding to the predicted wake turbulence using at least the weather data signals.

10. The aircraft of claim 9, wherein the avionics computer is operative to generate an advisory/avoidance response if the wake turbulence size of the predicted wake turbulence is greater than a predetermined size, and at least one of the wake turbulence location and the wake turbulence propagation path of the predicted wake turbulence indicates that the predicted wake turbulence is predicted to pass within the predetermined proximity of the flight path of the aircraft.

11. The aircraft of any one of claims 3 to 10, wherein the avionics computer is operative to use an algorithm to predict whether the predicted wake turbulence is predicted to pass within the predetermined proximity of the flight path of the aircraft,
wherein the algorithm is optionally configured to use at least one of the data signals to model airflow about the advancing aircraft to predict the predicted wake turbulence, and/or
wherein the algorithm is optionally configured to access a database of various aircraft with corresponding wake turbulence characteristics to predict the predicted wake turbulence.

12. The aircraft of any one of claims 2 to 11, wherein the avionics system further comprises:
a second transponder antenna configured to receive the ADS-B IN data signals from the advancing aircraft; and
a second transponder receiver box in communication with the first transponder antenna and the second transponder antenna to receive and digitize the ADS-B IN data signals, and wherein the first transponder receiver box is also in communication with the first transponder antenna and the second transponder antenna, and wherein the avionics computer is in communication with the first transponder receiver box and the second transponder receiver box.

13. An avionics system for an aircraft adapted to move along a flight path, the avionics system comprising:
at least one transponder antenna configured to receive a plurality of data signals, the data signals include ADS-B IN data signals from an advancing aircraft including an advancing aircraft length data signal, an advancing aircraft width data signal, an advancing aircraft latitude data signal, an advancing aircraft longitude data signal, an advancing aircraft barometric pressure altitude data signal, an advancing aircraft velocity data signal, an advancing aircraft emitter category data signal, and an advancing aircraft geometric altitude data signal;
at least one transponder receiver box in communication with the at least one transponder antenna to receive the ADS-B IN data signals; and
an avionics computer in communication with the at least one transponder receiver box that is configured to digitize the ADS-B IN data signals for communication to the avionics computer, wherein the avionics computer is operative to predict a wake turbulence generated by the advancing aircraft in response to at least one of the data signals, thereby defining a predicted wake turbulence.

14. The avionics system of claim 13, wherein the avionics computer is operative to predict an advisory/avoidance response if the predicted wake turbulence has a size greater than a predetermined size and if the predicted wake turbulence has at least one of a location and a propagation path that indicate that the predicted wake turbulence is predicted to pass within a predetermined proximity of the flight path of the aircraft.

15. A method for predicting a wake turbulence generated by an advancing aircraft, the method comprising the steps of:
receiving a plurality of data signals by an avionics system, the data signals including ADS-B IN data signals from the advancing aircraft including an advancing aircraft length data signal, an advancing aircraft width data signal, an advancing aircraft latitude data signal, an advancing aircraft longitude data signal, an advancing aircraft barometric pressure altitude data signal, an advancing aircraft velocity data signal, an advancing aircraft emitter category data signal, and an advancing aircraft geometric altitude data signal; and
predicting via the avionics system the wake turbulence generated by the advancing aircraft in response to at least one of the data signals.
